**Europäisches Patentamt**

**European Patent Office**

**Office européen des brevets**

(11) Publication number: **0 247 774 B1**

# EUROPEAN PATENT SPECIFICATION

(45) Date of publication of patent specification:
**17.04.91 Bulletin 91/16**

(51) Int. Cl.$^5$: **C08F 2/32, C02F 1/56, D21H 17/44**

(21) Application number: **87304412.7**

(22) Date of filing: **18.05.87**

(54) Cationic monomer delayed addition process.

(30) Priority: **19.05.86 US 864365**

(43) Date of publication of application:
**02.12.87 Bulletin 87/49**

(45) Publication of the grant of the patent:
**17.04.91 Bulletin 91/16**

(84) Designated Contracting States:
**DE FR GB NL SE**

(56) References cited:
**US-A- 4 217 262**

(73) Proprietor: **EXXON CHEMICAL PATENTS INC.**
**1900 East Linden Avenue**
**Linden New Jersey 07036 (US)**

(72) Inventor: **Robinson, Peter Mitchell**
**6162 Marlowe Drive**
**Columbus, GA 31904 (US)**
Inventor: **Van-Det, Nguyen**
**7042 Widgeon Drive**
**Midland, GA 31820 (US)**

(74) Representative: **Bawden, Peter Charles et al**
**EXXON CHEMICAL LIMITED EXXON**
**CHEMICAL TECHNOLOGY CENTRE PO Box 1**
**Abingdon Oxfordshire OX13 6BB (GB)**

## Description

This invention relates generally to water-soluble cationic copolymers dispersed in water-in-oil emulsions and an improved process for preparing such copolymers. More particularly, the present invention relates to cationic water-soluble polymers which are prepared by a delayed addition process as specified herein and which, due to the method of preparation, exhibit improved performance characteristics.

Water-in-oil emulsions containing cationic water-soluble copolymers dispersed therein are well-known in the art. Such emulsions have found a wide variety of uses, for example, as flocculants in the mining and paper industries and in sewage treatment, and as mobility control agents in enhanced oil recovery. These emulsions have generally been made by dissolving the entire monomer charge in the water and then preparing the water-in-oil emulsion which is the medium in which the polymerization is conducted. This conventional preparation process has been found to generally limit the performance characteristics of the resulting copolymers.

One attempt to overcome this problem with cationic copolymers is disclosed in U.S. Patent No. 4,152,200 of A.T. Coscia et al. wherein a portion of the cationic comonomer is withheld from the initial emulsion and then, after polymerization has been initiated, is added incrementally. The intent of Coscia et al. appears to be to balance the reactivity ratios of the monomer mixture to take into account the differences in reactivity of the cationic monomer versus the non-ionic comonomer. However, the cationic copolymers produced by Coscia et al., although superior in performance to conventionally prepared polymers, still have insufficient performance characteristics for many uses of cationic copolymers, particularly when used as retention aids for paper or as flocculants for municipal sewage sludge.

It is accordingly an object of the present invention to produce water-in-oil emulsions of finely dispersed water-soluble copolymer particles in which the emulsions have improved performance characteristics.

It is a further object to develop an improved process for preparing cationic copolymers whereby the surfactant and/or oil contents may be reduced below those amounts conventionally used.

It is a further object to develop an improved paper retention aid.

It is a further object to develop an improved flocculant for sludge dewatering.

These and other objects will become apparent from the ensuing description.

In accordance with the present invention, there is provided an improved process of preparing water-in-oil emulsions of water-soluble cationic copolymers which comprises (i) preparing an aqueous solution of a water-soluble non-ionic monomer and from about 5 to about 85 weight percent of the total quantity of a cationic monomer to be incorporated, (ii) emulsifying the aqueous solution in a sufficient quantity of a hydrocarbon oil to form a water-in-oil emulsion, (iii) adding the balance of the cationic monomer to the water-in-oil emulsion, and (iv) polymerizing the monomers to form a cationic water-in-oil emulsion copolymer. The copolymers so produced differ from copolymers prepared by other processes in that they exhibit improved performance characteristics.

The cationic copolymers of the present invention are comprised of at least 30 mole percent of repeating units derived from a water-soluble nonionic monomer and 1 to 70 mole percent repeating units derived from a cationic monomer. Suitable nonionic water-soluble monomers include acrylamide, methacrylamide, N-methylacrylamide, N-methylmethacrylamide and diacetone acrylamide.

Suitable cationic monomers include the methosulfate or methylchloride quaternaries of such as dimethylaminoethylacrylate, dimethylaminoethylmethacrylate, diethylaminoethylacrylate, and diethylaminoethylmethacrylate, as well as 3-(methylacrylamido)-propyltrimethylammonium chloride, diallyldimethylammonium chloride and 1-trimethylammonium-2-hydroxypropylmethacrylate methosulfate.

Other comonomer units may also be present in minor amounts in the copolymers. They may be either water-soluble or water-insoluble provided that the final copolymer is still water-soluble, i.e. the polymer is soluble in water in an amount of at least 1% by weight. If the other comonomer units are anionic, the mole proportion thereof should be less than or equal to that of the cationic comonomer so that the resulting polymer ionicity is neutral or cationic. Suitable other monomers include anionic, neutral, and amphoteric monomers which may be water-soluble or water-insoluble. Examples of these and other suitable monomers include acrylic acid and its salts, methacrylic acid and its salts, vinyl acetate, methyl acrylate, ethyl acrylate, betacarboxyethyl acrylate, propyl acrylate, methyl methacrylate, ethyl methacrylate, maleic acid and its salts, hydroxyethyl acrylate, hydroxyethyl methacrylate, styrene, acrylonitrile, 2-acrylamido-2-methylpropane sulfonic or phosphonic acid and their salts, dimethylaminopropylmethacrylamide, isopropylaminopropylmethacrylamide, methacrylamidopropylhydroxyethyldimethylammonium acetate, vinyl methyl ether, vinyl ethyl ether, vinyl sulfonic acid and its salts, vinyl pyridine, vinyl pyrrolidone, vinyl imidazole, styrene sulfonic acid and its salts.

The copolymers produced herein will comprise at least 30 mole percent water-soluble nonionic monomer units, 1 to 70 mole percent cationic monomer units, and the balance, if any, of such other monomer units such that the copolymer is water-soluble. Preferably, the copolymer will contain at least about 50 mole percent water-soluble nonionic monomer units and, most preferably, those units will be derived from acrylamide.

Although the present invention has been found to be independent of the particular emulsion polymerization method employed provided that a portion of the cationic monomer is added after the emulsion is formed, certain preferences are delineated in the general description of the emulsion preparation which follows :

A preliminary emulsion is made by homogenizing oil and aqueous phases. The oil phase of the emulsion, which generally comprises from about 5 to 35 percent by weight of the total emulsion, is comprised of one or more inert hydrophobic liquids. Preferably, the oil phase comprises about 15 to 30 percent of the emulsion. The oil used may be selected from a large class of organic liquids which are immiscible with water, including liquid hydrocarbons and substituted liquid hydrocarbons. Representative examples of such oils include benzene, xylene, toluene, mineral oils, kerosenes, naphthas and chlorinated hydrocarbons, such as perchloroethylene.

The oil phase also contains the primary surfactants, i.e. conventional emulsion polymerization stabilizers. Such stabilizers are well known to the art to promote the formation and stabilization of water-in-oil emulsions. Normally such emulsifiers have HLB values in the range of about 2 to about 10, preferably less than about 7. Suitable such emulsifiers include the sorbitan esters, phthalic esters, fatty acid glycerides, glycerine esters, as well as the ethoxylated versions of the above and any other well known relatively low HLB emulsifier. Examples of such compounds include sorbitan monooleate, the reaction product of oleic acid with isopropanolamide, hexadecyl sodium phthalate, decyl sodium phthalate, sorbitan stearate, ricinoleic acid, hydrogenated ricinoleic acid, glyceride monoester of lauric acid, glyceride monoester of stearic acid, glycerol diester of oleic acid, glycerol triester of 12-hydroxystearic acid, glycerol triester of ricinoleic acid, and the ethoxylated versions thereof containing 1 to 10 moles of ethylene oxide per mole of the basic emulsifier. Thus any emulsifier may be utilized which will permit the formation of the initial emulsion and stabilize the emulsion during the polymerization reaction.

These primary surfactants are used alone or in mixtures and are utilized in as low amounts as is possible since an excess will not only increase the cost of the resultant emulsion but may also reduce the performance. As such, all of the primary surfactants should together be used in amounts not greater than about 5% by weight of the total emulsion. Preferably the amounts is not greater than 3%, and most preferably it is less than about 2.5%.

The aqueous phase generally comprises about 95 to 65 percent by weight of the emulsion. Preferably, it comprises about 85 to 70 percent thereof. In addition to water, the aqueous phase contains the monomers being polymerized, except for the portion (about 5 to 85% preferably about 30 to 75%, and most preferably about 45 to 70%, all by weight) of the cationic monomer which is withheld, generally in an amount of less than about 45 percent, preferably 20 to 40 percent and most preferably 25 to 35 percent, by weight of the total emulsion, and generally chain transfer agents, initiators and sequesterants. Alternatively, the chain transfer agents, initiators and sequesterants may be added to the system after the preliminary emulsion has been prepared. The initiator may also be added continuously during the polymerization to control the rate of polymerization depending upon the particular monomers used and their reactivities. All of these variations are well known in the art.

Any conventional chain transfer agent may be employed, such as propylene glycol, isopropanol, 2-mercaptoethanol, sodium hypophosphite, dodecyl mercaptan and thioglycolic acid. The chain transfer agent is generally present in an amount of about 0.1 to 10 percent by weight of the total emulsion, though more may be used.

The initiator may be any free radical producing material well known in the art. The preferred free radical initiators are the redox-type and the azo-type polymerization initiators and they are generally used either individually or in any combination in an amount of about 0.0005 to 0.5 percent by weight of the total emulsion. Radiation may also be used to initiate the reaction.

Any conventional sequesterant may also be present in the aqueous phase, such as ethylenediaminetetraacetic acid or pentasodium diethylenetriamine pentaacetate. The sequesterant is generally present in an amount of about 0.01 to 2 percent by weight of the total emulsion, though more may be utilized.

Following preparation of the preliminary emulsion, the balance of the cationic monomer is added rapidly and with stirring. The addition rate has not been found to be critical but it must not be so fast as to destabilize the preliminary emulsion, nor so slow as to permit autocatalysis. The polymerization is then commenced in accordance with standard techniques. Preferably, the preliminary emulsion is heated to about the desired polymerization temperature prior to the addition of the balance of the cationic monomer. The heating may be accomplished by an external heating mechanism. More preferably, it is done by initiating polymerization of the monomers in the primary emulsion, allowing the temperature to rise to the desired level, and then suspending or quenching tie polymerization until after the balance of the cationic monomer has been added. The quenching may be accomplished by such as eliminating the sustaining catalyst feed or deliberately adding oxygen to the reaction. In this case, the rate of polymerization is effectively zero when the remaining cationic monomer is added, and then the polymerization is re-initiated. The cationic monomer may be added neat, though it is generally dissolved in water or even in the aqueous phase of a secondary water-in-oil latex. When a secondary latex is used, the total amount of oil and primary surfactants has been found to be reduced from that which would conventionally be used. The cationic monomer may be treated to remove the polymerization inhibiting oxygen, but this has not been found to be necessary.

The polymerization is generally run at a temperature of about −20°C to 200°C, preferably at about 0°C to 100°C, and most preferably at about 35°C to 75°C.

Preferably the polymerization is run at a pH of about 2 to 12 and a suitable amount of base or acid may be added to the preliminary emulsion to achieve the desired pH. The polymerization is usually completed in about an hour or two to several days, depending upon the monomers employed and other reaction variables. It is generally carried out at atmospheric pressure, but higher pressures are advantageously used when volatile ingredients are involved.

Following completion of the polymerization, the pH of the emulsion may be adjusted as desired. For an anionic polymer emulsion, this is generally about 4 to 10 ; for cationic emulsions about 2.0 to 7.0 ; and for non-ionic emulsions about 2.0 to 8.0. A breaker surfactant is generally added to yield a self-inverting final product. Any suitable breaker surfactant may be employed, experimentation being the best means of determining which breaker surfactant will perform optimally with a given emulsion system. Typical breaker surfactants include those having relatively high HLB numbers such as ethoxylated octyl and nonyl phenols, ethoxylated nonyl phenol formaldehyde resin, polyethylene oxide esters of fatty acids, dioctyl esters of sodium sulfosuccinate and others disclosed in U.S. 3,624,019. Typically, the breaker surfactant is added in an amount equal to about 0.5 to 5 percent by weight, based on the total emulsion. Preferably the amount is less than 3 percent and most preferably less than about 2.5 percent.

Once prepared, the emulsions of the present invention may be chemically modified in any known manner. "Chemically modified" is intended to cover further treatment of the dispersed water-soluble polymer and/or the addition of components to the dispersed water-soluble polymer which, without the stabilization provided by the emulsion stabilizers, would cause the normally water-soluble polymeric particles to coagulate or agglomerate. Examples of such further treatments are disclosed in U.S. Patent Nos. 4,052,353 and 4,171,296). The emulsion of the present invention may also be concentrated in any suitable manner, such as is disclosed in U.S. Patent No. 1,021,399.

When the cationic copolymer emulsions of the present invention are utilized as retention aids for paper, they are added to the paper furnish at the wet end of the paper machine in typical amounts such as 0.446 kg (0.1 pounds) to 6.64 kg (15.0 pounds) of active polymer per ton of finished paper. When they are used for flocculation in sludge dewatering, they are used in conventional amounts, i.e. 1 to 500 ppm on a sludge containing about 1 to 5% of suspended material.

The following examples are illustrative of the present invention, but are not in any way a limitation thereof. All parts are by weight unless otherwise specified.

Comparative Example A

A water phase containing 260 g. of acrylamide, 90 g. of dimethylaminoethylmethacrylate methyl chloride quaternary 1.2 g. of ethylenediaminetetraacetic acid, 0.5 g. of potassium bromate, and 331.6 g. of water is homogenized with an oil phase containing 220 g. of oil, 14.5 g. of ricinoleic acid triglyceride ester which has been hydrogenated and ethoxylated with five moles of ethylene oxide, and 4.8 g. of sorbitan monooleate. The resulting emulsion system is then transferred to a suitable reaction vessel with stirring and sparged with nitrogen. 30.0 g. of a 4.5% solution of sodium bisulfite is added continuously during the polymerization and the temperature of the emulsion increases to about 35-45°C. Cooling is provided to maintain this temperature and agitation is maintained for 4-10 hours. The polymerization is completed at the end of that time and results in an 8 mole % cationic polyacrylamide emulsion having 35 percent polymer solids.

Example I

The procedure of Comparative Example A was repeated except that 56.3 g. of the cationic monomer dimethylaminoethylmethacrylate methyl chloride quaternary was omitted in preparing the initial water-in-oil emulsion. The initial emulsion was then heated to 40°C via external heating and the omitted cationic monomer was added in the for of an 80% solution within about thirty minutes. Thereafter, polymerization proceeded with the commenacement of the bisulfite addition as in Comparative Example A.

4

Comparative Example B

The procedure of Example I was repeated except that the omitted cationic monomer was added after the polymerization had been commenced and the temperature had increased to 40°C. It was added continuously during the polymerization as described in U.S. Patent 4,152,200.

Example II

In order to determine the performance characteristics of the cationic copolymers prepared in each of Comparative Examples A and B and Example I, the emulsions were evaluated as retention aids on paper mill furnish. The testing was performed using a conventional Britt Jar procedure. The average results of several replications are given in Table I which follows :

## Table I
### Retention Aid Evaluation

| Polymer of Example | Dosage, #/ton active | % First Pass Retention Ash | % First Pass Retention Total |
|---|---|---|---|
| Comparative A | 1.0 | 24 | 60 |
| Comparative B | 1.0 | 32 | 60 |
| I | 1.0 | 37 | 67 |
| Comparative A | 1.5 | 35 | 62.5 |
| Comparative B | 1.5 | 41.5 | 64 |
| I | 1.5 | 47 | 72 |
| Comparative A | 2.0 | 38.5 | 65 |
| Comparative B | 2.0 | 48 | 66.5 |
| I | 2.0 | 52 | 74.5 |

As can be seen, in each case the polymer of the present invention clearly outperformed the polymers prepared by prior art methods.

Example III

The procedure of Example I to produce an emulsion was repeated except that the cationic monomer was changed to dimethylaminoethylmethacrylate methosulfate quaternary, which is generally known to produce a less effective retention aid. However, unexpectedly, when the Britt Jar evaluation of Example II was conducted with this copolymer the results were even superior to those observed with the copolymer of Example I, as can be seen in Table II below :

## Table II
### Results of Example III

| Dosage, #/ton active | % First Pass Retention of Ash | % First Pass Retention Total |
|---|---|---|
| 1.0 | 40 | 68 |
| 1.5 | 50.5 | 74 |
| 2.0 | 57 | 78 |

Example IV

The procedure of Example I was repeated except that instead of using external heating to increase the temperature to 40°C before adding the omitted cationic monomer, polymerization of the emulsion was instigated by commencing the addition of sodium bisulfite. When the temperature reached 40°C, (about less than 5% monomer conversion) the bisulfite addition was stopped and the reaction was terminated by oxygen quenching, i.e. essentially no polymerization was occuring. At this point, the omitted cationic monomer was added within about 30 minutes. After the addition was complete, the reactor was purged with nitrogen, the bisulfite feed was restarted and polymerization continued until the reaction was complete. When tested as a retention aid as in Example II, substantially equivalent results to those of Example I were observed.

Comparative Example C

The procedure of Example IV was repeated except that all of the cationic monomer was placed in the initial emulsion and none was added during the 30 minutes the reaction was stopped. When tested as a retention aid as in Example II, substantially equivalent results to those of Comparative Example A are observed.

Example V

The procedure of Example I was repeated except that thirty percent of the water-in-oil emulsion forming ingredients, i.e. water, oil, ricinoleic acid ester and sorbitan monooleate, was omitted from primary water-in-oil emulsion and the omitted cationic monomer was added in the water phase of a water-in-oil emulsion which contained the omitted thirty percent of the emulsion forming ingredients. When tested as a retention aid as in Example II, substantially equivalent results to those of Example I were observed.

Example VI

The procedures of Comparative Example A and then Example I was repeated except that (i) the cationic monomer was replaced with dimethylaminoethylmethacrylate methosulfate quaternary and the amount was increased to 27 mole percent, (ii) sorbitan monooleate was used as the sole surfactant, and (iii) the catalyst system was replaced with 2,2'-azobis(isobutyronitrile) which was added incrementally during the polymerizations.

In order to evaluate the performance characteristics of the resultant polymers in sludge dewatering, a series of conventional Buchner Funnel tests were performed on sludge from the City of Detroit sewage treatment plant. The tests are performed by taking a representative sludge sample, dividing it into aliquots, adding the desired amount of polymer being tested, conditioning the sludge by mixing the polymer solution in the sludge for 15 seconds at 450 rpm, pouring the conditioned sludge into a Buchner Funnel with moist filter paper, and then determining the drainage for a given period of time. The results of the tests are shown in Table III below.

## Table III
## Sludge Dewatering Evaluation
## Drainage in Milliliters

| Dosage | Polymer | |
| | Comparative | Invention |
| --- | --- | --- |
| #/ton | | |
| 20 | 49-95 | 113-117 |
| 30 | 70-103 | 125-131 |
| 40 | 63-92 | 136-140 |
| 45 | 47-73 | 138-141 |

**Claims**

1. A method of preparing a water-soluble cationic copolymer, which is composed of at least 30 mole percent of repeating units derived from a water-soluble nonionic monomer and 1 to 70 mole percent of repeating units derived from a cationic monomer, which comprises the steps of (i) preparing an aqueous solution of the nonionic monomer and from about 5 to 85 weight percent of the cationic monomer, (ii) emulsifying the aqueous solution in a sufficient quantity of hydrocarbon oil to form a water-in-oil emulsion, (iii) adding the balance of the cationic monomer to the emulsion while essentially no polymerisation is occurring and (iv) polymerising the monomers.

2. The method of Claim 1 wherein prior to adding the balance of the cationic monomer the temperature of the emulsion is increased to about the desired polymerisation temperature.

3. The method of Claim 1 or Claim 2 wherein the temperature is increased by external heating.

4. The method of any of the preceding claims wherein the temperature is increased by initiating polymerisation of the monomers and then suspending the polymerisation during the addition of the balance of the cationic monomer.

5. The method of any of the preceding Claims wherein the nonionic monomer is selected from the group consisting essentially of acrylamide, methacrylamide, N-methylacrylamide, diacetoneacrylamide, and N-methylmethacrylamide.

6. The method of any of the preceding claims wherein the cationic monomer provides 1 to 70 mole percent of the repeating units and is selected from the group consisting essentially of 3-methylacrylamidopropyltrimethylammonium chloride and the methosulfate and methylchloride quatenaries of dimethylaminoethylacrylate, dimethylaminoethylmethacrylate, diethylaminoethylacrylate and diethylaminoethylmethacrylate.

7. The method of any of the preceding claims further containing minor amounts of repeating units derived from monomers selected from the group consisting essentially of anionic monomers and nonionic water-insoluble monomers.

8. The method of any of the preceding claims wherein the balance of the cationic monomer is added as an aqueous solution.

9. The method of any of the preceding claims wherein the balance of the cationic monomer is added as a latex in the aqueous phase of a water-in-oil emulsion.

10. The method of any of the preceding claims wherein the balance of the cationic monomer is about 30 to 75 weight percent of the total cationic monomer being polymerised.

11. The use as a retention aid for paper of a water-in-oil emulsion prepared according to any of the preceding claims.

12. The use according to Claim 11 in amounts of about 0.446 kg (0.1 pound) to 6.69 kg (15.0 pounds) of active polymer per ton of finished paper.

13. The use as a flocculant of a copolymer prepared according to any of Claims 1 to 10.

14. The use of the flocculant of Claim 12 for sludge dewatering.

15. The use according to Claim 13 wherein the flocculant is used in an amount of 1 to 500 ppm when the sludge contains 1 to 5% by weight of suspended material.


**Ansprüche**

1. Verfahren zur Herstellung eines wasserlöslichen kationischen Copolymeren, das aus mindestens 30 Mol.% sich wiederholenden Einheiten, die sich aus einem wasserlöslichen nichtionischen Monomer ableiten, und 1 bis 70 Mol.% sich wiederholenden Einheiten, die sich aus einem kationischen Monomer ableiten, zusammengesetzt ist, wobei das Verfahren die folgenden Schritte umfaßt :

(i) Herstellen einer wäßrigen Lösung des nichtionischen Monomeren mit etwa 5 bis 85 Gew.% des kationischen Monomeren,

(ii) Emulgieren der wäßrigen Lösung in einer ausreichenden Menge Kohlenwasserstofföl, um eine Wasserin-Öl-Emulsion zu bilden,

(iii) Zugeben des restlichen kationischen Monomeren zu der Emulsion, wobei im wesentlichen keine Polymerisation auftritt und

(iv) Polymerisieren der Monomeren.

2. Verfahren nach Anspruch 1, bei dem vor der Zugabe des Restes an kationischem Monomer die Temperatur der Emulsion auf die gewünschte Polymerisationstemperatur angehoben wird.

3. Verfahren nach Anspruch 1 oder 2, bei dem die Temperatur durch externes Aufheizen angehoben wird.

4. Verfahren nach einem der vorhergehenden Ansprüche, bei dem die Temperatur durch Starten der Polymerisation der Monomeren angehoben wird und dann die Polymerisation während der Zugabe des Restes an kationischem Monomer angehalten wird.

5. Verfahren nach einem der vorhergehenden Ansprüche, bei dem das nichtionische Monomer im wesentlichen aus der Gruppe bestehend aus Acrylamid, Methacrylamid, N-Methylacrylamid, Diacetonacrylamid und N-Methylmethacrylamid ausgewählt wird.

6. Verfahren nach einem der vorhergehenden Ansprüche, bei dem das kationische Monomer 1 bis 70 Mol.% der sich wiederholenden Einheiten liefert und im wesentlichen aus der Gruppe bestehend aus 3-Methylacrylamidopropyltrimethylammoniumchlorid und den quaternären Methosulfat- und Methylchloridverbindungen des Dimethylaminoethylacrylats, Dimethylaminoethylmethacrylat, Diethylaminoethylacrylat und Diethylaminoethylmethacrylat ausgewählt wird.

7. Verfahren nach einem der vorhergehenden Ansprüche, bei dem weiterhin geringe Mengen sich wiederholende Einheiten vorhanden sind, die sich von Monomeren ausgewählt aus der Gruppe bestehend im wesentlichen aus anionischen Monomeren und nichtionischen wasserunlöslichen Monomeren ableiten.

8. Verfahren nach einem der vorhergehenden Ansprüche, bei dem der Rest des kationischen Monomeren als wäßrige Lösung zugegeben wird.

9. Verfahren nach einem der vorhergehenden Ansprüche, bei dem der Rest des kationischen Monomeren als Latex in die wäßrige Phase einer Wasser-in-Öl-Emulsion zugegeben wird.

10. Verfahren nach einem der vorhergehenden Ansprüche, bei dem der Rest des kationischen Monomeren etwa 30 bis 75 Gew.% des gesamten kationischen Monomeren, das polymerisiert wird, ausmacht.

11. Verwendung einer gemäß einem der vorhergehenden Ansprüche hergestellten Wasser-in-Öl-Emulsion als Retentionshilfsmittel für Papier.

12. Verwendung nach Anspruch 11, wobei Mengen von etwa 0,446 kg (0,1 pound) bis 6,69 kg (15,0 pounds) des aktiven Polymeren pro Tonne an fertigem Papier verwendet werden.

13. Verwendung eines gemäß einem der Ansprüche 1 bis 10 hergestellten Copolymeren als Flockungsmittel.

14. Verwendung des Flockungsmittels nach Anspruch 13 zur Schlammentwässerung.

15. Verwendung nach Anspruch 13, bei der das Flockungsmittel in einer Menge von 1 bis 500 ppm verwendet wird, wenn der Schlamm 1 bis 5 Gew.% suspendiertes Material enthält.

## Revendications

1. Procédé de préparation d'un copolymère cationique hydrosoluble, qui est constitué d'au moins 30 moles% de motifs répétés dérivés d'un monomère non ionique hydrosoluble et de 1 à 70 moles% de motifs répétés dérivés d'un monomère cationique, qui comprend les étapes consistant (i) à préparer une solution aqueuse du monomère non ionique et d'environ 5 à 85% en poids du monomère cationique, (ii) à émulsionner la solution aqueuse dans une quantité d'une huile hydrocarbonée suffisante pour former une émulsion eau-dans-huile, (iii) à ajouter le reste du monomère cationique à l'émulsion en l'absence pratiquement totale de polymérisation et (iv) à provoquer la polymérisation des monomères.

2. Procédé suivant la revendication 1, dans lequel, avant addition du reste du monomère cationique, la température de l'émulsion est élevée à une valeur approximativement égale à la température de polymérisation désirée.

3. Procédé suivant la revendication 1 ou la revendication 2, dans lequel la température est élevée par un chauffage extérieur.

4. Procédé suivant l'une quelconque des revendications précédentes, dans lequel la température est élevée en déclenchant la polymérisation des monomères, puis en interrompant la polymérisation au cours de l'addition du reste du monomère cationique.

5. Procédé suivant l'une quelconque des revendications précédentes, dans lequel le monomère non ionique est choisi dans le groupe comprenant essentiellement l'acrylamide, le méthacrylamide, le N-méthylacrylamide, le diacétone-acrylamide et le N-méthylméthacrylamide.

6. Procédé suivant l'une quelconque des revendications précédentes, dans lequel le monomère cationique représente 1 à 70 moles% des motifs répétés et est choisi dans le groupe comprenant essentiellement le chlorure de 3-méthylacrylamidopropyltriméthylammonium et les dérivés quaternaires de méthosulfate et de chlorure de méthyle de l'acrylate de diméthylamino-éthyle, du méthacrylate de diméthylamino-éthyle, de l'acrylate de diéthylamino-éthyle et du méthacrylate de diéthylamino-éthyle.

7. Procédé suivant l'une quelconque des revendications précédentes, dans lequel sont présents en outre de faibles quantités de motifs répétés dérivés de monomères choisis dans le groupe comprenant essentiellement des monomères anioniques et des monomères non ioniques insolubles dans l'eau.

8. Procédé suivant l'une quelconque des revendications précédentes, dans lequel le reste du monomère cationique est ajouté sous forme d'une solution aqueuse.

9. Procédé suivant l'une quelconque des revendications précédentes, dans lequel le reste du monomère cationique est ajouté sous forme de latex a la phase aqueuse d'une émulsion eau-dans-huile.

10. Procédé suivant l'une quelconque des revendications précédentes, dans lequel le reste du monomère cationique représente une quantité d'environ 30 à 75% en poids du monomère cationique total soumis à une polymérisation.

11. Utilisation comme adjuvant de rétention pour le papier d'une émulsion eau-dans-huile préparée suivant l'une quelconque des revendications précédentes.

12. Utilisation suivant la revendication 11, en des quantités d'environ 0,446 kg (0,1 lb) à 6,69 kg (15,0 lbs) de polymère actif par tonne de papier fini.

13. Utilisation comme floculant d'un copolymère préparé suivant l'une quelconque des revendications 1 à 10.

14. Utilisation du floculant suivant la revendication 12 pour l'élimination de l'eau des boues.

15. Utilisation suivant la revendication 13, dans laquelle le floculant est utilisé en une quantité de 1 à 500 ppm lorsque les boues contiennent 1 à 5% en poids de matière en suspension.